# EUROPEAN PATENT SPECIFICATION

(11) **EP 1 429 544 B1**
(45) Date of publication and mention of the grant of the patent: **18.01.2012**
(21) Application number: 02027452.8
(22) Date of filing: 10.12.2002
(51) Int. Cl.: H04N 5/262

(54) **Creating effects for images**
Effektserzeugung für Bildern
Création d'effets pour des images

(43) Date of publication of application: 16.06.2004
(73) Proprietor: Sony Ericsson Mobile Communications AB, 221 88 Lund (SE)
(72) Inventor: Häkansson, Johannes, 24137 Eslöv (SE)
(74) Representative: Dahnér, Christer

(56) References cited:
- EP-A- 1 168 838
- US-A- 5 434 958
- US-A1- 2002 171 566
- JÖRG HEUER ET AL: "Adaptive Multimedia Messaging based on MPEG-7 - The M3-Box" (INTERNET), 10 November 2000 (2000-11-10), XP002201575 Retrieved from the Internet: <URL:http://www.lnt.de/~kaup/paper/mmsa-20 00.pdf> [retrieved on 2002-05-29]

## Description

### TECHNICAL FIELD OF THE INVENTION

The present invention relates to a method for providing storable image effects in a cellular phone, an Image editor for providing storable image effects in a cellular phone, a cellular phone for providing storable image effects and a computer program product for enabling provision of storable image effects in a cellular phone.

### DESCRIPTION OF RELATED ART

The cellular phones of today have more and more different functions and applications in them. It is today normal to provide the phones with a camera for taking pictures or provide a camera that can be connected to the phone while using the display as a viewfinder. The cameras therefore also often have a photo editor application allowing different effects to be applied to captured images. These effects are pre-stored in the editor when assembling the camera in the factory.

It is in the field of cellular phones interesting to provide more and more diversified functions and applications to the user, so that they can use their phone to reflect their individual identity and personality. Thus there have been developed among other things shells that can be put on the phone, that have different types of designs as well as the possibility to download and create own ring signals. It would within the field of these devices therefore be interesting for a user to create his own effects for use on images, which he either captures himself or downloads or receives from others in order to mark his special identity onto such Images.

A number of documents exist which describe the use of effects on pictures in a digital camera. For Instance JP 11007538 describes applying dynamic effects on still pictures and US 2002/0105589 describes using effects filters for applying different effects on a picture. In the latter document a user can combine different filtering techniques as desired for providing new filtering effects.

US 2001/0034776 describes a computer system including a server supplying effects to different connected user terminals. A user terminal downloads an effect processing application from a server and uses the application when processing a picture. In the processing the user selects an effect from an effect server and receives the effect from the server for application on an image.

US 5,434,958 describes a method and an apparatus for creating a video image of a photographic print having a posed subject and a selected special effects modification added to it. A video image capture device provides a video image of a posed subject on a video display device, while a data recall device provides a special effect from a data storage device. Both the posed subject and the special effect are simultaneously displayed on the video display device. A subject to be photographed can here view a selection of special effects modifications to the video image and thereafter choose a desired combination of the two.

EP 1,168,838 describes an information processing apparatus where effects can be applied to a number of scenes or clips of images combined together. Effects and clips are here stored as separate files.

US 2003/0071903 describes a digital still camera storing image processing control data preset by a maker of the digital still camera to be changeable for each image, and a user's setting of offset data. The offset data may be downloaded by the user on the Internet and the user may utilize offset data set by another user. The image output system then generates an image file including the image data, the image processing control data, and the offset data. In one application, the digital still camera has a function of radio communication.

However none of the documents describes how a user can design and store his own effects to be applied on images.

There is thus a need for providing a way for users of local processing devices to be able to design and store their own effects to be used on images in order for users to put their own individual stamp on these effects.

### SUMMARY OF THE INVENTION

The present invention is thus directed towards solving the problem of providing the possibility to design own effects to be provided on images in a local processing device.

This is achieved by generating an effect and storing the effect as a file, such that it can be used for later application on images.

One object of the present invention is to provide a method enabling provision of the possibility to design and store own effects to be provided on images in a local processing device.

According to a first aspect of the present invention, the object is achieved by a method of providing storable image effects in a local processing device comprising the steps of:
generating an effect for application on digital images, and
storing the effect as an effects file, such that it can be used for later application on more than one image.

A second aspect of the present invention is directed to a method including the features of the first aspect, wherein the effect is stored in a predefined effects format.

A third aspect of the present invention is directed towards a method including the features of the second aspect, wherein the format is provided through an XML (Extensible Markup Language) file.

A fourth aspect of the present invention is directed towards a method including the features of the second aspect, wherein the step of storing includes storing the file with parameter settings made by a user.

A fifth aspect of the present invention is directed towards a method including the features of the first aspect, further including the step of transferring the effects file to another device.

A sixth aspect of the present invention is directed towards a method including the features of the fifth aspect, wherein the step of transferring is performed over a wireless medium.

A seventh aspect of the present invention is directed towards a method including the features of the first aspect, wherein the effect comprises a matrix of calculations to be performed on pixels of an image.

An eighth aspect of the present invention is directed towards a method including the features of the first aspect, further including the step of applying the effect on an image before storing and storing the effect as an effect file after detecting acceptance from a user of the device.

A ninth aspect of the present invention is directed towards a method including the features of the first aspect, wherein the step of generating an effect includes the step of retrieving a stored effects file and modifying the file with a new effect.

Another object of the present invention is to provide a local processing device providing the possibility to design own effects to be provided on images in a local processing device.

According to a tenth aspect of the present invention, this object is achieved by a local processing device for providing storable image effects comprising:
an image effects store, and
an image editor arranged to generate a new effect for application on digital images based on entries of a user and allowing storing of said effect as an effects file in the image effect store.

An eleventh aspect of the present invention is directed towards a device including the features of the tenth aspect, wherein said effects are stored in a defined effects format.

A twelfth aspect of the present invention is directed towards a device including the features of the eleventh aspect, wherein the format is provided through an XML (Extensible Markup Language) file.

A thirteenth aspect of the present invention is directed towards a device including the features of the eleventh aspect, wherein the image editor is arranged to store the file with parameter settings made by a user.

A fourteenth aspect of the present invention is directed towards a device including the features of the tenth aspect, further including at least one transmitting unit arranged to transmit effect files to at least one other device.

A fifteenth aspect of the present invention is directed towards a device including the features of the fourteenth aspect, wherein the transmitting unit is arranged to transmit effect files over a wireless interface.

A sixteenth aspect of the present invention is directed towards a device including the features of the tenth aspect, wherein an effect comprises a matrix of calculations to be performed on images.

A seventeenth aspect of the present invention is directed towards a device including the features of the tenth aspect, wherein the image editor is further arranged to apply an effect on an image before storing and storing the effect as an effects file after detecting acceptance from a user.

An eighteenth aspect of the present invention is directed towards a device including the features of the tenth aspect, wherein the image editor when generating an effect is arranged to retrieve a stored effect file from the image effect store and apply a new effect to said file.

A nineteenth aspect of the present invention is directed towards a device including the features of the tenth aspect, wherein the device is a portable communication device.

A twentieth aspect of the present invention is directed towards a device including the features of the nineteenth aspect, wherein it is a cellular phone.

Yet another object is to provide an image editor for a local processing device providing the possibility to design own effects to be provided on images in the local processing device.

According to a twenty-first aspect of the present invention, this object is achieved by an image editor for providing storable image effects in a local processing device and arranged to:
generate a new effect for application on digital images based on entries of a user, and
allowing storing of said effect as an effects file in an image effect store.

Yet another object is to provide a computer program product for a local processing device providing the possibility to design own effects to be provided on images in the local processing device.

According to a twenty-second aspect of the present invention, this object is achieved by a computer program product, for enabling provision of storable image effects in the local processing device, comprising a computer readable medium having thereon:
computer program code means, to make the processing device execute, when said program is loaded in the processing device:
   generate a new effect for application on digital images based on entries of a user, and
   allowing storing of said effect as an effects file in an image effect store.

Yet another object is to provide a computer program element for a local processing device providing the possibility to design own effects to be provided on images in the local processing device.

According to a twenty-third aspect of the present invention, this object is achieved by a computer program element, for enabling provision of storable image effects in a local processing device, comprising a computer readable medium having thereon:
computer program code means, to make the processing device execute,
when said program is loaded in the processing device:
   generate a new effect for application on digital images based on entries of a user, and
   allowing storing of said effect as an effects file in an image effect store.

Yet another object of the present invention is to provide a signal, which provides the user of a local processing device to send effects to other devices.

According to a twenty-fourth aspect of the present invention, this object is achieved by a computer data signal embodied in a carrier wave comprising
effect information relating to digital images in the form of an effects file in a defined effects format generated by a local processing device, such that the effect information can be used for later application on digital images.

The invention has the following advantages. It allows the generation of personalised effects. The user does therefore not have to register with some central server or service in order to get new effects. A user can therefore independently create his own effects.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 shows a front view of a local processing device in the form of a cellular phone,
fig. 2 shows a back view of the local processing device from fig. 1,
fig. 3 shows a block schematic of the relevant parts of the invention inside the phone of fig. 1,
fig. 4 shows a flowchart of a method according to the invention,
fig. 5 shows a general outline of a file format for an effect made according to the invention,
fig. 6 shows a signal format for transmitting an effects file from the local processing device according to the invention to another device, and
fig. 7 shows a computer readable medium on which program code for performing the method according to the invention is provided.

### DETAILED DESCRIPTION OF EMBODIMENTS

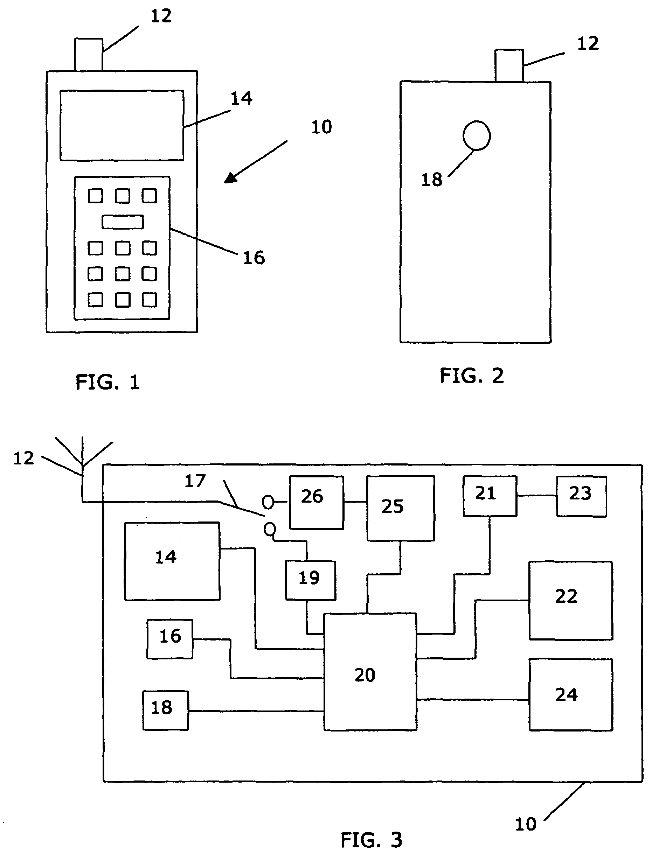

A local processing device 10 according to the invention is shown in a front view in fig. 1. The device is local because it is not dependent on a central processing device for performing the invention. The device is preferably a portable communication device and in the preferred embodiment the device is a cellular phone 10 having an antenna 12, a display 14, and a keypad 16. Apart from making and receiving telephone calls, the keypad 16 is used for entering information such as selection of functions and applications and responding to prompts and the display 14 is used for displaying functions, applications and prompts to a user of the phone. One such application is an image editor according to the invention. A cellular phone is just one example of a device in which the invention can be implemented. The invention can for instance also be used in a PDA (personal digital assistant), a palm top computer, a lap top computer, a smartphone and a digital camera or in a PC (personal Computer). In the case of a lap top computer communication can take place by using a so called PC card.

Fig. 2 shows a back view of the phone 10, where the lens of a camera 18 is provided. Thus the phone also includes a camera function.

Fig. 3 shows a block schematic of the different parts of the phone 10 relevant to the present invention. The display 14, the keypad 16 and a camera unit 18 are here shown as separate boxes connected to an image editor 20. The image editor 20 is furthermore connected to an image store 22 and to an image effects store 24 as well as to an MMS (Multimedia Messaging Service) application unit 25. The MMS application unit 25 is connected to a radio unit 26. The radio unit 26 is connected to the antenna 12 via a switch 17 in order to provide communication with other devices using a wireless network, which in the preferred embodiment is a GPRS network. A Bluetooth™ communication unit 19 is connected between the switch 17 and the image editor 20. A infrared control unit 21 is also connected to the image editor 20, which infrared control unit 21 is also connected to a an infrared communication interface 23 in the form of an infrared eye. In this way a user has the choice of communicating with other devices using the wireless network, Bluetooth™ or the infrared communication interface. It should be realised that other type of networks are also possible such as third generation wireless network, for instance wireless CDMA (Code Division Multiple Access) networks.

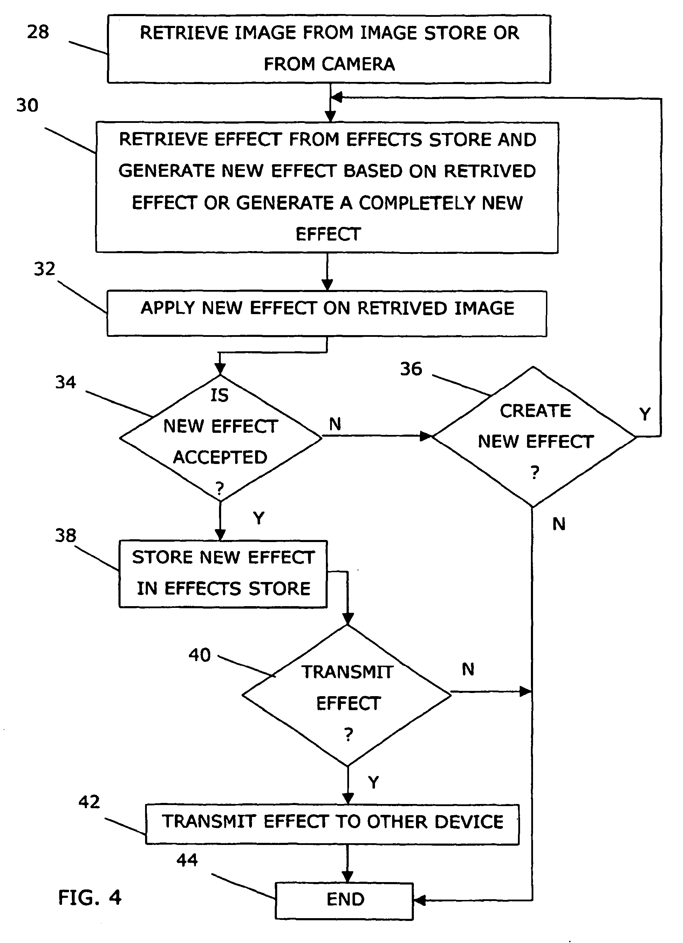

A first aspect of the present invention will now be explained in more detail with reference being made to fig. 3 and 4, which latter figure shows a flow chart of a method according to the invention. A user can capture images by taking pictures using the camera unit 18. These images are then stored in the image store 22, either directly by the camera unit 18 or by the image editor 20 after receiving the picture from the camera unit 18. The picture can be in any known format such as JPEG or GIF. The method according to the invention starts with a user of the phone selecting an image editing application via a menu provided on the display 14 of the phone 10, after which selection he gets in contact with the image editor unit 20. Actual selection is then made using the keypad 16. In the image editor 20 a user can select to apply effects on images. The image editor has a number of pre-stored effects present in the image effects store 24. In the editor 20, the user can however also elect to make a new effect. When the user has selected to start making a new effect, he is first presented with the possibility to fetch an image from the image store 22. The method according to the invention therefore starts with the image editor 20 retrieving an image from the image store 22, step 28. As an alternative the input can be received directly from the camera. Thereafter the user can generate a new effect for the image. He can then select to retrieve an already stored effect or start generating a completely new effect. The image editor 20 thus retrieves an effect file from the effect store or generates a completely new effect based on inputs made by the user via the keypad 16, step 30. Effects that can be applied or generated are effects such as varying the brightness, colours used, or adding other effects like cutting the picture in different ways, inserting shadowing, overlaying other images like droplets or sunshine, sepia, negative art, pastel, slim, stretch, mosaic and provide the image in black & white. Effects can then be provided as clip arts provided on the screen. These effects can be combined in order to provide an individual new effect of the user. The user can also generate completely new effects based on a matrix of mathematical calculations applied on the pixels in the image, which can for instance be used for providing different psychedelic effects. The matrix here has to be at least 3x3 pixels large. As the effect is generated it is applied on the retrieved image, step 32, for letting the user see the results of the effect applied on the image. Then the user is asked by the image editor 20 to accept or reject the effect, step 34. In case he accepts the effect, step 34, the effect is stored as an effects file in the effects store 24, step 38. Thereafter the user is asked if he wants to transmit the effect to another user, step 40. In case he wants that, step 40, the image editor 20 presents the user with a choice of communication using MMS, the infrared communication interface or Bluetooth™. If the user selects MMS, the image editor 20 connects to the MMS application unit 25 for generating an MMS message and the MMS application unit 25 thereafter connects to the radio unit 26, which transmits the effect as an attachment in an MMS file sent to another user via the network, step 42. The user could here have decided to use Bluetooth™ instead, in which case the image editor 20 would connect to the Bluetooth™ communication unit 19, which would also use the antenna 12 for communicating with other units. In case the user would have chosen infrared communication, the image editor 20 would have connected to the infrared control unit 21, which would have been communicating with other devices using the infrared eye 23. After this the method is ended, step 44. In case the user did not want to transmit the effect, step 40, the method is ended directly, step 44. In case the effect was not accepted earlier, step 34, the user is asked if he wants to create a new effect, step 36. In case he does, the method goes back to step 30 and in case he does not the method is ended, step 44.

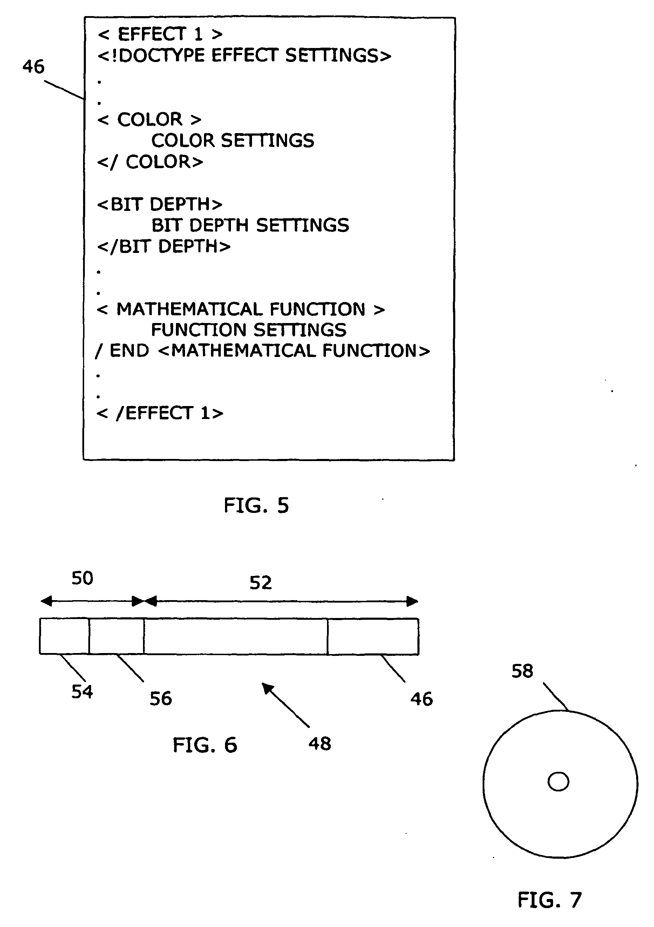

Now the generation of an effects file will be described in more detail. The effects generated by the user are stored as files of a known format in the effects store. This format is a standardised format recognised by other image editors. In the preferred embodiment, the file is an XML (Extensive Markup Language) file, of which fig. 5 outlines such a file 46. First the effects file gets a name decided by the user and then the image editor inserts a piece of information about what type of file it is, which is an effects file. Each image editor receiving an effects file will recognise it as such upon reading this information. Thereafter the user gets to indicate some different parameters, which are entered. The parameters have been obtained by the user stating different settings, like colour, i.e. if the file is black and white, colour or grey scale and in that case also the bit depth of the colour coding, which can be 1, 2, 8, 16 and 24 bits. In fig. 5 only a few of the possible different type of settings are indicated. These parameters could as an alternative have been read from the effects applied to the image retrieved from the image store. The XML file has a number of additional predefined fields, where different settings can be made for the individual setting of different effects, like some or all mentioned in the previous paragraph. The user can also define an own function for applying an effect, which function can be determined with the aid of the image editor. This function is then a matrix of mathematical calculations performed on each pixel of the image. The format is known to other devices having an image editor, such that they can also apply the effect.

Fig. 6 shows an MMS message 48 used for sending the effects file to another device. In order to do this the message has a header field 50 and a payload field 52. In the header there is included a destination address 54 of a receiving device as well as the sending address 56 of the phone. It is of course possible to include more information in the header. The payload 52 then includes the XML-file 46 as an attachment. Also the payload can include other information such as text, sound files and image files as well as other types of attachments.

The image editor is preferably provided in the form of one or more processors with corresponding program memories containing suitable software code. The two stores are preferably provided in the form of memories. The image editor according to the invention can also be provided in a local computer. Therefore, the software for providing the method according to the invention can also be provided on a data carrier, which when loaded into the computer can perform the method according to the invention. The software can also be transferred to the phone from the PC or be directly loaded into the phone if it has a reader for the program data carrier. The data carrier is shown in fig. 7 as an optical disc 58 of the CD ROM type. It should be realised that the program code can also be downloaded to the phone from another device for instance via the GPRS network described earlier. It is also possible that the extra functionality of the image editor can be provided in the form of an extra memory module, which can be inserted into the phone.

The present invention has many advantages. It allows the generation of personalised effects and the sending of these effects to other devices. The user does therefore not have to register with some central server or service in order to get new effects. A user can therefore independently create his own effects.

The present invention can be varied in many ways. The phone does not have to include the camera function, but the camera can be connected to the phone via a cord, a Bluetooth™ connection or be plugged into a system connector of the phone. Likewise the image editor does not have to be provided in the phone, but can be provided in such a camera communicating with a phone or other devices via any of the above described ways. The image editor according to the invention can also be provided in a computer like a PC and transfer image effects to different local processing devices or other PCs via for instance e-mail. The device according to the invention is furthermore not limited to using MMS for communicating effects, but can for instance communicate using WAP (Wireless Application Porotocol) instead. The device does in fact not have to use a wireless network at all in order to share effects with other devices, but can do this via Bluetooth™ links with other devices, as mentioned previously. The effects can be static effects but also include dynamic effects, like moving objects. An effect generated can furthermore be applied to only parts of an image. It is also possible to have more than one effect applied to an image, where perhaps some are applied to different areas of the image. The effects file does not have to be an XML file, but can for instance also be an HTML-file or a WML-file. The image on which the effects are applied have in the previous section been described in relation to still pictures, but they can also be applied to moving images.

## Claims

1. A method of providing storable image effects in a cellular phone (10) comprising the steps of:
- generating an effect in an image editor (20) of the cellular phone (10) for application on digital images based on entries of a user (step 30), the effect being in the form of:
- cutting a picture in different ways and/or
- inserting shadowing and/or
- overlaying other images or sepia or negative art or pastel or slim or stretch or mosaic and/or
- a matrix of mathematical calculations applied on pixels in an image,
- storing the effect as an effects file (46), (step 38), such that it can be used for later application on more than one image, the effects file (46) being in a defined standardised effects format recognized by other image editors, and
- transferring the effects file (46) to another device, (step 40).

2. The method according to claim 1, wherein the defined standardised effects format is provided through an XML, Extensible Markup Language, file or an HTML-file or a WML-file.

3. The method according to claim 1 or 2, wherein the step of storing includes storing the file with parameter settings made by a user.

4. The method according to any previous claim, wherein the step of transferring is performed over a wireless medium.

5. The method according to any previous claim, further including the step of applying the effect on an image (step 32) before storing and storing the effect as an effects file (46) after detecting acceptance (step 34) from a user of the cellular phone.

6. The method according to any previous claim, wherein the step of generating an effect includes the step of retrieving a stored effects file (step 28) and modifying the file with a new effect (step 30).

7. An image editor (20) in a cellular phone (10) for providing storable image effects in the cellular phone (10), wherein the image editor (20):
generates a new effect for application on digital images based on entries of a user,
stores said effect as an effects file (46) in an image effect store (24) of the cellular phone (10), the effects file (46) being in a defined standardised effects format recognized by other image editors,
**characterised in that**
the effect generated is in the form of:
- cutting a picture in different ways and/or
- inserting shadowing and/or
- overlaying other images or sepia or negative art or pastel or slim or stretch or mosaic and/or
- a matrix of mathematical calculations applied on pixels in an image, and
said image editor (20) is arranged to order a transmitting unit (26) of the cellular phone (10) to transmit the effect file to another device.

8. The image editor (20) according to claim 7, wherein the defined standardised effects format is provided through an XML, Extensible Markup Language, file or an HTML-file or a WML-file.

9. The image editor (20) according to claim 7 or 8, wherein it is arranged to store the file with parameter settings made by a user.

10. The image editor (20) according to any of claims 7 - 9, being further arranged to apply an effect on an image before storing and storing the effect as an effects file after detecting acceptance from a user.

11. The image editor (20) according to any of claims 7 - 10, which when generating an effect is arranged to retrieve a stored effects file from the image effect store (24) and apply a new effect to said file.

12. A cellular phone (10) for providing storable image effects comprising:
an image effects store (24), at least one transmitting unit (26) arranged to transmit effect files to at least one other device and an image editor (20) according to any of claims 7 - 11.

13. The cellular phone (10) according to claim 12, wherein the transmitting unit (26) is arranged to transmit effect files over a wireless interface.

## Patentansprüche

1. Verfahren zum Bereitstellen speicherbarer Bildeffekte in einem Mobiltelefon (10), die Schritte umfassend:
Erzeugen eines Effekts in einem Bild-Editor (20) des Mobiltelefons (10) zum Anwenden auf digitale Bilder basierend auf Einträgen des Benutzers (Schritt 30), wobei der Effekt in der Form ist von:
- Schneiden eines Bilds in verschiedenen Arten und/oder
- Einfügen von Schattierungen und/oder
- Überlagern anderer Bilder oder Sepia oder Negativgestalt oder Pastell oder Verschlankung oder Streckung oder Mosaik und/oder
- einer Matrix von mathematischen Berechnungen, die auf Pixeln in einem Bild angewendet werden,
- Speichern des Effekts als eine Effektdatei (46), (Schritt 38), so dass es für spätere Anwendungen auf mehr als ein Bild verwendet werden kann, wobei die Effektdatei (46) in einem definierten standardisierten Effektformat ist, welches durch andere Bild-Editoren erkannt wird, und
- Übertragen der Effektdatei (46) zu anderen Einrichtungen, (Schritt 40).

2. Verfahren nach Anspruch 1, wobei das definierte standardisierte Effektformat durch eine XML-(Extensible Markup Language)-Datei oder eine HTML-Datei oder eine WML-Datei bereitgestellt wird.

3. Verfahren nach einem der Ansprüche 1 oder 2, wobei der Schritt des Speicherns beinhaltet Speichern der Datei mit Parametereinstellungen, die durch einen Benutzer gemacht wurden.

4. Verfahren nach einem der vorangegangenen Ansprüche, wobei der Schritt des Übertragens über ein Drahtlosmedium durchgeführt wird.

5. Verfahren nach einem der vorangegangenen Ansprüche, ferner beinhaltend den Schritt des Anwendens des Effekts auf ein Bild (Schritt 32), vor dem Speichern, und Speichern des Effekts als eine Effektdatei (46), nachdem eine Akzeptanz von einem Benutzer des Mobiltelefons erfasst wurde (Schritt 34).

6. Verfahren nach einem der vorangegangenen Ansprüche, wobei der Schritt des Erzeugens eines Effekts beinhaltet den Schritt des Abfragens einer gespeicherten Effektdatei (Schritt 28) und Modifizieren der Datei mit einem neuen Effekt (Schritt 30).

7. Bild-Editor (20) in einem Mobiltelefon zum Bereitstellen speicherbarer Bildeffekte in dem Mobiltelefon (10), wobei der Bild-Editor (20):
einen neuen Effekt zum Anwenden auf digitale Bilder basierend auf Einträgen eines Benutzers erzeugt,
die Effekte als eine Effektdatei (46) in einem Bildeffektspeicher (24) des Mobiltelefons (10) speichert,
wobei die Effektdatei (46) in einem definierten standardisierten Effektformat ist, das durch andere Bild-Editoren erkannt wird, und
**gekennzeichnet dadurch, dass**
der erzeugte Effekt in der Form ist von:
- Schneiden eines Bildes in verschiedenen Arten und/oder
- Einfügen einer Schattierung und/oder
- Überlagern anderer Bilder oder Sepia oder Negativgestalt oder Pastell oder Verschlankung oder Streckung oder Mosaik und/oder
- eine Matrix von mathematischen Berechnungen, die auf Pixel in einem Bild angewendet werden, und
der Bild-Editor (20) eingerichtet ist, um eine Übertragungseinheit (26) des Mobiltelefons (10) anzuweisen, die Effektdatei zu einer anderen Einrichtung zu übertragen.

8. Bild-Editor (20) nach Anspruch 7, wobei das definierte standardisierte Effektformat bereitgestellt wird durch ein XML- (Extensible Markup Language)-Datei oder eine HTML-Datei oder eine WML-Datei.

9. Bild-Editor (20) nach Anspruch 7 oder 8, wobei es eingerichtet ist, um die Datei mit Parametereinstellungen zu speichern, die durch einen Benutzer gemacht wurden.

10. Bild-Editor (20) nach einem der Ansprüche 7 bis 9, ferner eingerichtet zum Anwenden eines Effekts auf ein Bild vor dem Speichern und Speichern des Effekts als eine Effektdatei, nachdem die Akzeptanz von einem Benutzer erfasst wurde.

11. Bild-Editor (20) nach einem der Ansprüche 7 bis 10, der, wenn er einen Effekt erzeugt, eingerichtet ist, um eine gespeicherte Effektdatei von dem Bildeffektspeicher (24) abzurufen und einen neuen Effekt auf die Datei anzuwenden.

12. Funktelefon (10) zum Bereitstellen speicherbarer Bildeffekte umfassend:
einen Bildeffektspeicher (24), mindestens eine Übertragungseinheit (26), welche eingerichtet ist, um Effektdateien zu mindestens einer anderen Einrichtung zu übertragen und einen Bild-Editor (20) nach einem der Ansprüche 7 bis 11.

13. Mobiltelefon (10) nach Anspruch 12, wobei die Übertragungseinheit (26) eingerichtet ist, um Effektdateien über eine Drahtlos-Schnittstelle zu übertragen.

## Revendications

1. Procédé de création d'effets mémorisables d'image dans un téléphone cellulaire (10) comprenant les étapes :
- de génération d'un effet dans un retoucheur d'image (20) du téléphone cellulaire (10) pour application sur des images numériques en se basant sur des entrées d'un utilisateur (étape 30), l'effet étant sous la forme :
- de découpage d'une vue de différentes façons ; et/ou
- d'insertion d'ombrage ; et/ou
- de superposition d'autres images ou de sépia ou d'effet artistique négatif ou de pastel ou d'amaigrissement ou d'étirement ou de mosaïque ; et/ou
- d'une matrice de calculs mathématiques appliqués sur des pixels d'une image ;
- de mémorisation de l'effet sous forme d'un fichier d'effets (46), (étape 38), de façon qu'il puisse être utilisé pour application ultérieure ou pour plus d'une image, le fichier d'effets (46) étant dans un format défini d'effets standardisés reconnu par d'autres retoucheurs d'image ; et
- de transfert du fichier d'effets (46) à un autre dispositif, (étape 40).

2. Procédé selon la revendication 1, dans lequel le format défini d'effets standardisés est fourni au moyen d'un fichier en langage extensible de marquage (XML pour "Extensible Markup Language") ou d'un fichier en langage de marquage d'hypertexte (HTML pour "HyperText Markup Language") ou d'un fichier en langage de marquage sans fil (WML pour "Wireless Markup Language").

3. Procédé selon la revendication 1 ou 2, dans lequel l'étape de mémorisation inclut la mémorisation du fichier avec des réglages de paramètres faits par un utilisateur.

4. Procédé selon l'une quelconque des revendications précédentes, dans lequel l'étape de transfert se fait par un moyen sans fil.

5. Procédé selon l'une quelconque des revendications précédentes, incluant en outre l'étape d'application de l'effet sur une image (étape 32) avant mémorisation et de mémorisation de l'effet sous forme d'un fichier d'effets (46) après détection de l'acceptation (étape 34) par un utilisateur du téléphone cellulaire.

6. Procédé selon l'une quelconque des revendications précédentes, dans lequel l'étape de génération d'un effet inclut l'étape de récupération d'un fichier d'effets mémorisé (étape 28) et de modification du fichier à l'aide d'un nouvel effet (étape 30).

7. Retoucheur d'image (20) dans un téléphone cellulaire (10) destiné à créer des effets mémorisables d'image dans le téléphone cellulaire (10), dans lequel le retoucheur d'image (20) :
engendre un nouvel effet pour application sur des images numériques en se basant sur des entrées d'un utilisateur ;
mémorise ledit effet sous forme d'un fichier d'effets (46) dans une mémoire d'effets d'image (24) du téléphone cellulaire (10),
le fichier d'effets (46) étant dans un format défini d'effets standardisés reconnu par d'autres retoucheurs d'image, et
**caractérisé :**
**en ce que** l'effet engendré est sous la forme :
- de découpage d'une vue de différentes façons ; et/ou
- d'insertion d'ombrage ; et/ou
- de superposition d'autres images ou de sépia ou d'effet artistique négatif ou de pastel ou d'amaigrissement ou d'étirement ou de mosaïque ; et/ou
- d'une matrice de calculs mathématiques appliqués sur des pixels d'une image ; et
**en ce que** ledit retoucheur d'image (20) est agencé pour ordonner à une unité de transmission (26) du téléphone cellulaire (10) de transmettre le fichier d'effets à un autre dispositif.

8. Retoucheur d'image (20) selon la revendication 7, dans lequel le format défini d'effets standardisés est fourni au moyen d'un fichier en XML (langage extensible de marquage) ou d'un fichier en HTML ou d'un fichier WML.

9. Retoucheur d'image (20) selon la revendication 7 ou 8, dans lequel on fait en sorte de mémoriser le fichier avec des réglages de paramètres faits par un utilisateur.

10. Retoucheur d'image (20) selon l'une quelconque des revendications 7 à 9, qui est en outre agencé pour appliquer l'effet sur une image avant mémorisation et pour mémoriser l'effet sous forme d'un fichier d'effets après détection de l'acceptation par un utilisateur.

11. Retoucheur d'image (20) selon l'une quelconque des revendications 7 à 10, qui, lorsque l'on engendre un effet, est agencé pour récupérer, dans la mémoire d'effets d'image (24), un fichier d'effets mémorisé et pour appliquer un nouvel effet audit fichier.

12. Téléphone cellulaire (10) destiné à fournir des effets mémorisables d'image comprenant : une mémoire d'effets d'image (24), au moins une unité de transmission (26) agencée pour transmettre des fichiers d'effets à au moins un autre dispositif et un retoucheur d'image (20) selon l'une quelconque des revendications 7 à 11.

13. Téléphone cellulaire (10) selon la revendication 12, dans lequel l'unité de transmission (26) est agencée pour transmettre des fichiers d'effets sur une interface sans fil.
